# EUROPEAN PATENT APPLICATION

(11) **EP 2 311 676 A1**
(43) Date of publication of application: **20.04.2011**
(21) Application number: 10187224.0
(22) Date of filing: 12.10.2010
(51) Int. Cl.: B60H 1/02, B60K 11/04

(54) **Vehicle with rankine cycle system and refrigerating cycle system**

(30) Priority: 13.10.2009 JP 2009236304
(71) Applicant: Kabushiki Kaisha Toyota Jidoshokki, Kariya-shi, Aichi 448-8671 (JP)
(72) Inventor: Mori, Hidefumi, Kariya-shi Aichi 448-8671 (JP); Iguchi, Masao, Kariya-shi Aichi 448-8671 (JP); Enokijima, Fuminobu, Kariya-shi Aichi 448-8671 (JP); Kawaguchi, Masahiro, Kariya-shi Aichi 448-8671 (JP)
(74) Representative: TBK-Patent

(57) **Abstract**

A vehicle with a Rankine cycle system (100) and a refrigerating cycle system (300) for air-conditioning includes a Rankine condenser (11) forming a part of the Rankine cycle system which converts waste heat of a vehicle into power and an air-conditioning condenser (13) forming a part of the refrigerating cycle system. The Rankine condenser (11) and the air-conditioning condenser (13) are disposed one above the other in the vehicle as viewed from a front of the vehicle.

## Description

The present invention relates to a vehicle refrigerator, and more specifically to a vehicle refrigerator including a refrigerating cycle system condenser used for a vehicle air-conditioner and a Rankine cycle system condenser.

There has been a social demand for vehicles equipped with an internal combustion engine to improve their fuel economy while reducing the carbon dioxide (CO2) emissions and a technology has been developed which is intended for efficient utilization of energy developed by the vehicle without releasing. Such technology includes a waste heat utilization system using Rankine cycle system which converts waste heat discharged from the internal combustion engine such as heat of cooling water and exhaust gas into power, e.g., for an electric motor. Rankine cycle system includes a boiler for generating superheated steam by isobaric heating of liquid-phase fluid as working fluid, an expansion device for adiabatic expansion of the superheated steam thereby to develop power, a condenser for liquefying the steam expanded in the expansion device by isobaric cooling and a pump for pumping and feeding the liquefied fluid to the boiler.

Japanese Patent Application Publication 2008-297961 discloses a vehicle refrigerator including a waste heat utilization system that has Rankine cycle system and refrigerating cycle system. The vehicle refrigerator is used for a vehicle air conditioner. The Rankine cycle system includes a pump, a heater (a boiler), an expansion device and a Rankine condenser (a Rankine cycle system condenser) and Rankine refrigerant as working fluid circulating through the Rankine cycle system. Meanwhile, refrigerant for the refrigerating cycle system circulates through the refrigerating cycle system. The refrigerating cycle system includes a compressor for compressing refrigerant into high-temperature and high-pressure refrigerant, an air-conditioning condenser for cooling refrigerant discharged from the compressor, an expansion valve for allowing refrigerant discharged from the air-conditioning condenser to expand and an evaporator for vaporizing refrigerant by heat exchanging between refrigerant expanded by the expansion valve and air and also cooling air. The Rankine condenser for cooling Rankine refrigerant and the air-conditioning condenser for cooling refrigerant cooperate to form a part of the vehicle refrigerator.

When the vehicle refrigerator is mounted on a vehicle, the air-conditioning condenser and the Rankine condenser are disposed in series with respect to the flowing direction of outside air that is introduced to them for heat exchanging. The air-conditioning condenser is disposed upstream of the Rankine condenser with respect to the outside air flowing direction.

However, when the refrigerating cycle system of the vehicle refrigerator disclosed in the above Publication operates under a high-load condition, air with high heat quantity flows out from the air-conditioning condenser. The Rankine condenser which is exposed to the such air with high heat quantity can not cool Rankine refrigerant enough to reduce the pressure of Rankine refrigerant, with the result that thermal efficiency of Rankine cycle system deteriorates.

The present invention is directed to providing a vehicle refrigerator that improves the thermal efficiency of Rankine cycle system to solve the above problem.

### SUMMARY OF THE INVENTION

A vehicle with a Rankine cycle system and a refrigerating cycle system for air-conditioning includes a Rankine condenser forming a part of the Rankine cycle system which converts waste heat of a vehicle into power and an air-conditioning condenser forming a part of the refrigerating cycle system. The Rankine condenser and the air-conditioning condenser are disposed one above the other in the vehicle as viewed from a front of the vehicle.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic configuration cross sectional view of a vehicle refrigerator mounted on a vehicle according to a first embodiment;
FIG. 2 is a schematic configuration diagram of the vehicle refrigerator of FIG. 1 and its associated components;
FIG. 3 is a schematic configuration cross sectional view showing the operation of the vehicle refrigerator of FIG. 1;

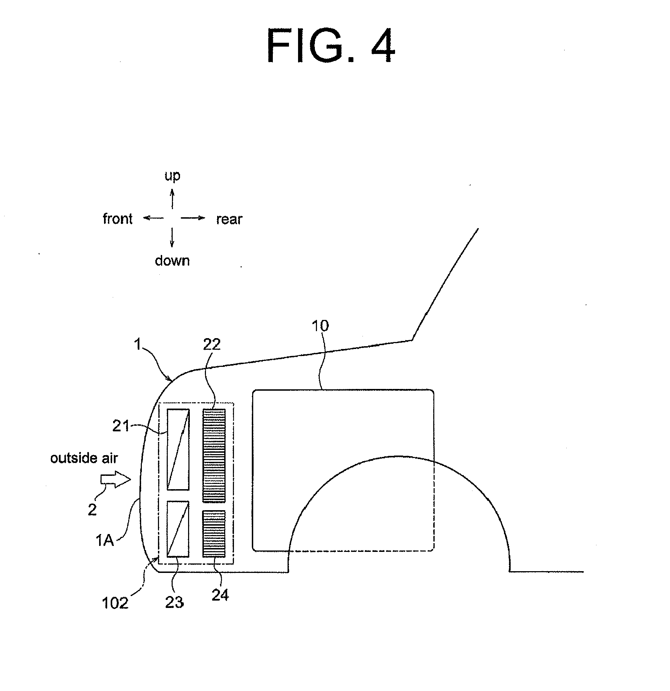

FIG. 4 is schematic configuration cross sectional view of a vehicle refrigerator mounted on a vehicle according to a second embodiment; and
FIG. 5 is schematic configuration cross sectional view of a vehicle refrigerator mounted on a vehicle according to a third embodiment.

### DETAILED DESCRIPTION OF THE PREFERRED EMBODIMENTS

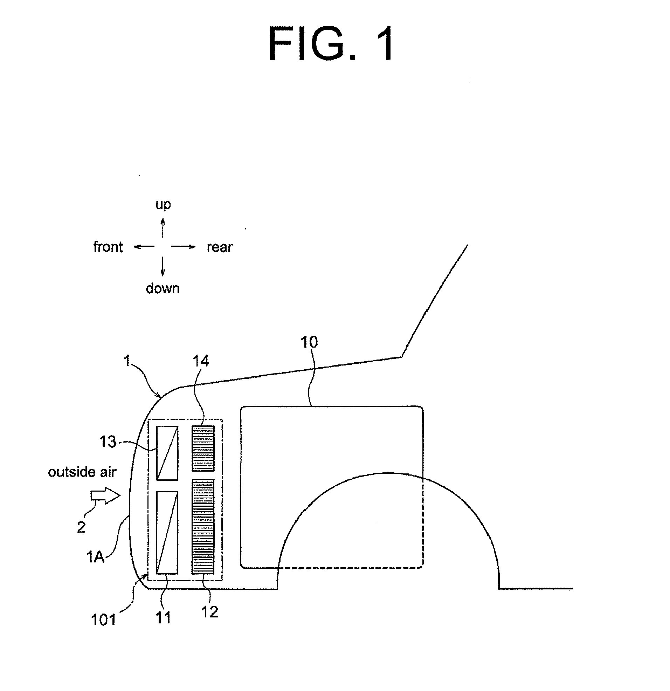

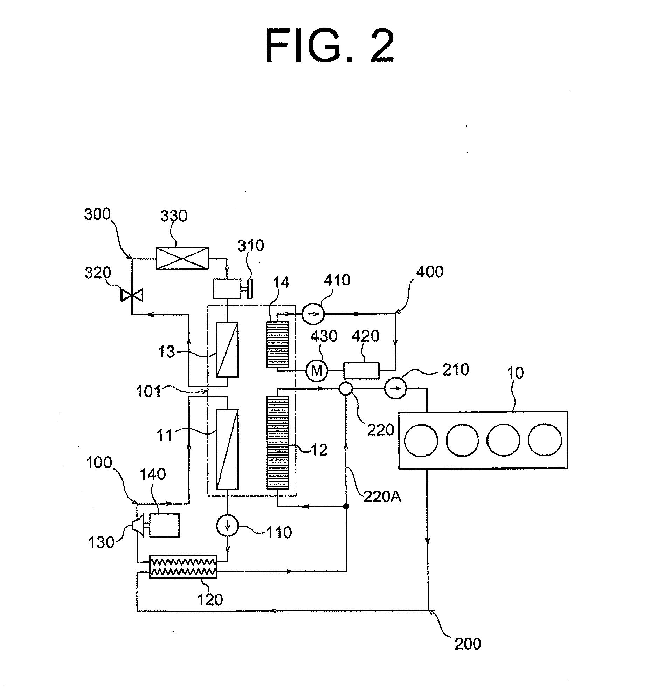

The following will describe the vehicle refrigerator according to the first embodiment of the present invention and its associated components with reference to FIGS 1 and 2, wherein the vehicle refrigerator is designated by numeral 101. The vehicle refrigerator 101 is mounted on a hybrid vehicle 1 that is driven by an engine and an electric motor as the power source of the vehicle.

Referring to FIG. 2, the vehicle 1 (refer to FIG. 1) includes an internal combustion engine 10 and an electric motor 430 as the power source for driving the vehicle 1 and an inverter 420 as a power drive for converting direct current of a battery (not shown) into alternate current that is supplied to the electric motor 430.

The engine 10 is cooled by engine-cooling water circulating through the engine 10 and an engine cooling circuit 200.

An engine pump 210 is provided upstream of the engine 10 in the engine cooling circuit 200 as viewed in the engine-cooling water circulating direction for pumping out engine-cooling water. The engine pump 210 is connected to the engine 10 and pumps out engine-cooling water to the engine 10 for cooling the engine 10.

A boiler 120 as a heat exchanger is provided downstream of the engine 10 in the engine cooling circuit 200 and connected to the engine 10. The boiler 120 is arranged so that engine-cooling water after cooling the engine 10 flows through the boiler 120. Rankine cycle system refrigerant that will be described in detail later also circulates through the boiler 120 so that heat is exchanged between the engine-cooling water and the Rankine cycle system refrigerant.

An engine radiator 12 as a heat exchanger is provided downstream of the boiler 120 in the engine cooling circuit 200. The engine radiator 12 is connected to the boiler 120 so that engine-cooling water after exchanging heat in the boiler 120 flows through the engine radiator 12. Heat is exchanged in the engine radiator 12 between engine-cooling water and outside air 2 (refer to FIG. 1) introduced into the vehicle 1 thereby to cool the engine-cooling water.

A three-way valve 220 is provided downstream of the engine radiator 12 in the engine cooling circuit 200. The three-way valve 220 is connected to the engine radiator 12 so that engine-cooling water after being cooled in the engine radiator 12 flows through the three-way valve 220. The three-way valve 220 is also connected to a bypass circuit 220A and the engine pump 210. The bypass circuit 220A bypassing the engine radiator 12 connects the three-way valve 220 to a passage located between the engine radiator 12 and the boiler 120. Engine-cooling water flowed out from the boiler 120 flows through the bypass circuit 220A, bypassing the engine radiator 12. The three-way valve 220 changes the ratio of flow rates of engine-cooling water flowing through the engine radiator 12 and the bypass circuit 220A in accordance with the temperature of engine-cooling water so that the temperature of engine-cooling water flowing through the engine pump 210 and into the engine 10 is adjusted.

Engine-cooling water flowing through the three-way valve 220 is drawn by the engine pump 210 and pumped out thereof for circulation through the engine cooling circuit 200.

The inverter 420 and the electric motor 430 which are heated during operation are cooled by inverter-cooling water circulating through an inverter cooling circuit 400. Inverter-cooling water corresponds to power device cooling water.

An inverter pump 410 is provided upstream of the inverter 420 as viewed in the inverter-cooling water circulating direction in the inverter cooling circuit 400 for pumping out inverter-cooling water. The inverter pump 410 pumps out and feed inverter-cooling water to the inverter 420 for cooling the inverter 420.

The electric motor 430 is provided downstream of the inverter 420 in the inverter cooling circuit 400. Inverter-cooling water after cooling the inverter 420 flows to the electric motor 430, thereby cooling the electric motor 430.

An inverter radiator 14 as a heat exchanger is provided downstream of the electric motor 430. The inverter radiator 14 corresponds to a power device radiator. Inverter-cooling water after cooling the inverter 420 and the electric motor 430 flows through the inverter radiator 14. Heat is exchanged in the inverter radiator 14 between inverter-cooling water and outside air 2 (refer to FIG. 2) introduced into the vehicle 1, so that inverter-cooling water is cooled.

The inverter radiator 14 is connected to the inverter pump 410 located downstream of the inverter radiator 14. Inverter-cooling water after being cooled in the inverter radiator 14 is pumped out again by the inverter pump 410 and circulates through the inverter cooling circuit 400.

The vehicle 1 (refer to FIG. 1) includes a Rankine cycle system 100 (FIG. 2) for converting waste heat of the engine 10 into power. The waste heat of the engine 10 includes the heat of the engine-cooling water after cooling the engine 10 and also the heat of the exhaust gas discharged from the engine 10. In the description hereinafter, the Rankine cycle system 100 is used to make use of the heat that the engine-cooling water has as waste heat of the engine 10.

The Rankine cycle system 100 includes a pump 110 for Rankin cycle (hereinafter referred to as a Rankine pump), the aforementioned boiler 120, an expansion device 130 and a condenser 11 for Rankin cycle (hereinafter referred to as a Rankine condenser). Refrigerant for the Rankine cycle system 100 (hereinafter referred to as Rankine refrigerant) circulates in the Rankine cycle system 100.

The Rankine pump 110 pumps out Rankine refrigerant. The boiler 120 as a heat exchanger is provided downstream of the Rankine pump 110 as viewed in the flowing direction of Rankine refrigerant in the Rankine cycle system 100. The boiler 120 is connected to the Rankine pump 110 and Rankine refrigerant pumped by the Rankine pump 110 flows through the boiler 120. Thus, heat is exchanged in the boiler 120 between Rankine refrigerant and engine-cooling water flowing through the engine cooling circuit 200. At this time, Rankine refrigerant is heated by the heat exchange between Rankine refrigerant and engine-cooling water and converted into high-temperature and high-pressure superheated steam.

The expansion device 130 is provided downstream of and connected to the boiler 120. Rankine refrigerant in the state of superheated steam flows into the expansion device 130. The expansion device 130 allows Rankine refrigerant to be expanded and to reduce its pressure. Motional energy created by such expansion of Rankine refrigerant causes a rotating body such as a turbine (not shown) to rotate, thereby generating power as a rotating drive force. The expansion device 130 is also connected to a generator 140 that is operated by the rotating drive force of the expansion device 130 for generating electric power. Thus, electric power generated by the generator 140 is charged in a battery (not shown) and will be used for driving the electric motor 430 and so on.

The Rankine condenser 11 is provided downstream of and connected to the expansion device 130. Rankine refrigerant expanded and having its pressure reduced in the expansion device 130 flows through the Rankine condenser 11. Heat is exchanged in the Rankine condenser 11 between Rankine refrigerant and outside air 2 (refer to FIG. 1) that is introduced into the vehicle 1 and Rankine refrigerant is cooled and condensed into a low-temperature liquid refrigerant, accordingly. The Rankine condenser 11 is further connected to the Rankine pump 110 located downstream of the Rankine condenser 11. Low-temperature and liquid Rankine refrigerant is pumped by the Rankine pump 110 for circulation through Rankine cycle system 100 again.

The vehicle 1 (refer to FIG. 1) has a refrigerating cycle system 300 for air-conditioning a vehicle compartment (not shown).

The refrigerating cycle system 300 includes a compressor 310, a condenser 13 for the air-conditioning (hereinafter referred to as an air-conditioning condenser), an expansion valve 320 and an evaporator 330.

The compressor 310 is driven by a drive force of the engine 10 for compressing refrigerant into high-temperature and high-pressure refrigerant.

The air-conditioning condenser 13 as a heat exchanger is provided downstream of the compressor 310 with respect to the flowing direction of refrigerant in the refrigerating cycle system 300. The air-conditioning condenser 13 is connected to the compressor 310 and refrigerant compressed by the compressor 310 into high-temperature and high-pressure refrigerant flows through the air-conditioning condenser 13. Heat is exchanged in the air-conditioning condenser 13 between refrigerant and outside air 2 (refer to FIG. 2) introduced into the vehicle 1, so that refrigerant is cooled and condensed in the air-conditioning condenser 13.

The expansion valve 320 is provided downstream of and connected to the air-conditioning condenser 13. Refrigerant condensed in the air-conditioning condenser 13 flows through the expansion valve 320 where refrigerant is expanded and its pressure is reduced.

The evaporator 330 as a heat exchanger is provided downstream of and connected to the expansion valve 320. Refrigerant expanded and having its pressure reduced by the expansion valve 320 flows through the evaporator 330. Heat is exchanged in the evaporator 330 between refrigerator and outside air, so that refrigerant is evaporated for cooling surrounding air. Air thus cooled by the evaporator 330 is guided into the vehicle compartment (not shown).

The evaporator 330 is further connected to the compressor 310 located downstream of the evaporator 330. Refrigerant evaporated by the evaporator 330 is drawn, compressed and discharged by the compressor 310 for circulation through the refrigerating cycle system 300.

The Rankine condenser 11, the engine radiator 12, the air-conditioning condenser 13 and the inverter radiator 14 are provided for cooling Rankine refrigerant, engine-cooling water, refrigerant and inverter-cooling water, respectively and cooperates to form the vehicle refrigerator 101.

The Rankine condenser 11, the engine radiator 12, the air-conditioning condenser 13 and the inverter radiator 14 form a condenser for the Rankine cycle system, a radiator for the internal combustion engine of the vehicle, a condenser for the refrigerating cycle system and a radiator for the inverter, respectively.

Referring to FIG. 1 showing the schematic configuration cross sectional view of the vehicle refrigerator 101 mounted on the vehicle 1, the designations front, rear, up and down correspond to forward (leftward), rearward (rightward), upward and downward directions of vehicle 1, respectively. In the drawing of FIG. 1, the engine 10 is installed in the front of the vehicle 1 and the vehicle refrigerator 101 is located forward of the engine 10.

In the vehicle refrigerator 101, the engine radiator 12 and the inverter radiator 14 are disposed one above the other. Specifically, the inverter radiator 14 is disposed above the engine radiator 12. The Rankine condenser 11 and the air-conditioning condenser 13 of the vehicle refrigerator 101 are disposed forward of the engine radiator 12 and the inverter radiator 14, respectively. The Rankine condenser 11 and the air-conditioning condenser 13 are also disposed one above the other. Specifically, the air-conditioning condenser 13 is located above the Rankine condenser 11. Therefore, the engine radiator 12 and the inverter radiator 14 are disposed rearward of or behind the Rankine condenser 11 and the air-conditioning condenser 13, respectively.

The following will describe the operation of the vehicle refrigerator 101 with reference to FIGS. 1 through 3. Referring to FIG. 1, outside air 2 is introduced into the vehicle 1 and flows rearward through the vehicle refrigerator 101. Specifically, the outside air 2 flows through the Rankine condenser 11 and the air-conditioning condenser13 and then through the engine radiator 12 and the inverter radiator 14, respectively.

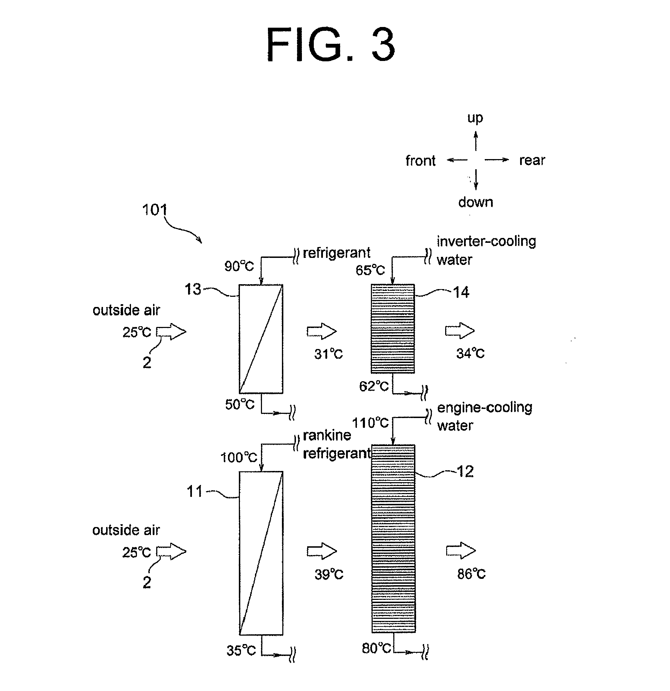

The following will describe the operation of the vehicle refrigerator 101 when outside air 2 with the temperature of 25°C is introduced into the vehicle 1. Referring to FIG. 3, outside air 2 introduced into the vehicle 1 (refer to FIG. 1) flows firstly through the air-conditioning condenser 13 and the Rankine condenser 11, respectively. While flowing through the air-conditioning condenser 13 and the Rankine condenser 11, heat exchanging is done between the outside air 2 and refrigerant flowing through the air-conditioning condenser 13 and also Rankine refrigerant flowing through the Rankine condenser 11, respectively.

Referring to FIG. 2, refrigerant just before flowing into the air-conditioning condenser 13 is compressed by the compressor 310 to a high-pressure and high-temperature, e.g., 90°C. Rankine refrigerant just before flowing into the Rankine condenser 11 is heated by the boiler 120 and then pressure of Rankine refrigerant is reduced by the expansion device 130 and the temperature of Rankine refrigerant is then, e.g., 100°C.

Referring to FIG. 3, refrigerant flowing through the air-conditioning condenser 13 reduces its temperature from 90°C to 50°C through heat exchanging with outside air 2, and the outside air 2 increases its temperature from 25°C to 31 °C, accordingly. On the other hand, Rankine refrigerant flowing through the Rankine condenser 11 decreases its temperature from 100°C to 35°C and the temperature of outside air 2 increases from 25°C to 39°C due to the heat exchange between Rankine refrigerant and outside air 2.

The above decreases in temperature of refrigerant and Rankine refrigerant are suitable for the operations of the refrigerating cycle system 300 and the Rankine cycle system 100 (refer to FIG. 2). In this case, the heat radiation from the air-conditioning condenser 13 and Rankine condenser 11 amount to 6kw and 15kw, respectively.

Most of the outside air 2 passing through the air-conditioning condenser 13 also passes through the inverter radiator 14. Outside air 2 passing through the Rankine condenser 11 also passes through the engine radiator 12. The temperature of inverter cooling water flowing into the inverter radiator 14 is increased after flowing through the inverter 420 and the electric motor 430 (as shown in FIG. 2) to e.g., 65°C. The temperature of cooling water flowing into the engine radiator 12 is increased after flowing through the engine 10 to e.g., 110°C.

Referring to FIG. 3, inverter cooling water flowing through the inverter radiator 14 decreases its temperature from 65°C to 62°C and the temperature of outside air 2 increases from 31 °C to 34°C due to the heat exchange between inverter cooling water and outside air 2. On the other hand, engine cooling water flowing through the engine radiator 12 decreases its temperature from 110°C to 80°C and the temperature of outside air 2 increases from 39°C to 86°C due to the heat exchange between engine cooling water and outside air 2.

The amounts of decrease in temperature of inverter cooling water and engine cooling water are suitable for the operations of the inverter cooling circuit 400 and the engine cooling circuit 200 (refer to FIG. 2). In this case, the heat radiation of the inverter radiator 14 and the engine radiator 12 amount to 3kw and 50kw, respectively.

By disposing the Rankine condenser 11 in the frontmost position of the vehicle 1 without arranging any other heat exchanger forward of the Rankine condenser 11, low-temperature outside air 2 without receiving any heat is introduced into the Rankine condenser 11. Therefore, Rankine refrigerant is condensed efficiently in the Rankine condenser 11 and, therefore, the pressure of Rankine refrigerant flowing out from the Rankine condenser 11 is reduced efficiently. The lower the pressure of Rankine refrigerant flowing into the Rankine pump 110 (refer to FIG. 2) is, the higher the thermal efficiency of Rankine cycle system is. Thus, the thermal efficiency of Rankine cycle system 100 (refer to FIG. 2) is greatly improved.

When arranging heat exchangers one in front of another in the vehicle 1 with respect to the flowing direction of outside air 2, i.e., in the longitudinal direction of the vehicle 1, the heat exchangers whose heat radiation amounts are comparable each other should be disposed adjacently for ensuring the performance of the heat exchanger located in the rear. Specifically, the temperature of outside air 2 after passing through the Rankine condenser 11 is relatively higher than that of outside air 2 after passing through the air-conditioning condenser 13. Therefore, the Rankine condenser 11 should preferably be followed by the engine radiator 12 into which relatively high-temperature engine-cooling water flows rather than the inverter radiator 14 into which relatively low-temperature inverter-cooling water flows.

Since the engine radiator 12 has a high heat exchanging performance and a large surface area with respect to the flowing direction of outside air 2, the cooling performance of engine-cooling water, i.e., the heat exchanging performance of the engine radiator 12 is substantially unaffected even if the Rankine condenser 11 is disposed forward of the engine radiator 12.

Further, the Rankine condenser 11 and the engine radiator 12 are both large in size and, therefore, they should preferably be disposed one behind the other with respect to the flowing direction of outside air 2, i.e., in the longitudinal direction of the vehicle 1 (refer to FIG. 1) for space saving. When the Rankine condenser 11 and the air-conditioning condenser 13 are disposed one above the other, the engine radiator 12 and the inverter radiator 14 should preferably be disposed one above the other, as shown in FIG. 3.

On the other hand, the inverter radiator 14, into which inverter cooling water of a relatively low temperature flows, should preferably be disposed forward of or rearward of the air-conditioning condenser 13 that has small heat radiation. Furthermore, the temperature of the outside air 2 after passing through the air-conditioning condenser 13 is cool enough not to impair the heat exchanging performance of the inverter radiator 14. Thus, the air-conditioning condenser 13 should preferably be disposed forward of the inverter radiator 14. By disposing the air-conditioning condenser 13 in the frontmost position of the vehicle 1, low-temperature outside air 2 receiving not heat is introduced into the air-conditioning condenser 13. Therefore, refrigerant is cooled and condensed efficiently in the air-conditioning condenser 13 and, therefore, the efficiency of the refrigerating cycle system 300 (refer to FIG. 2) is increased accordingly.

However, the required performance of the refrigerating cycle system 300 (refer to FIG. 2) changes depending on the driving condition of the vehicle 1 (refer to FIG. 1) and, therefore, the amount of heat radiation from the air-conditioning condenser 13 may be changed to increase more than the aforementioned 6kw. Accordingly, the temperature of outside air 2 introduced into the inverter radiator 14 may be increased thereby to cause a decrease in the heat exchanging performance of the inverter radiator 14.

Therefore, the arrangement of the air-conditioning condenser 13 and the inverter radiator 14 in the longitudinal direction of the vehicle 1 should be determined depending on which of the efficiency of the refrigerating cycle system 300 and the cooling performance of the inverter cooling circuit 400 (refer to FIG. 2) is set higher.

The vehicle refrigerator 101 of the above-described embodiment according to the present invention includes the Rankine cycle system 100 which converts waste heat of the vehicle 1 into power and a part of which is formed by the Rankine condenser 11, and the refrigerating cycle system 300 a part of which is formed by the air-conditioning condenser 13, wherein the Rankine condenser 11 and the air-conditioning condenser 13 are disposed one above the other as viewed from the front 1A of the vehicle 1.

In such an arrangement of the Rankine condenser 11 and the air-conditioning condenser 13, no outside air 2 heated by heat exchanging in the air-conditioning condenser 13 is introduced into the Rankine condenser 11. Therefore, the temperature of the outside air 2 introduced into the air-conditioning condenser 13 will not be increased due to the heat of the Rankine condenser 11. The pressure of Rankine refrigerant is efficiently decreased in the Rankine condenser 11 and, therefore, the efficiency of Rankine cycle system 100 can be improved.

Generally, a condenser includes cooling pipes located in the center thereof having a lot of cooling fins for cooling refrigerant and tanks provided on opposite lateral sides of the condenser and having an inlet and an outlet. The condenser has a structure in which refrigerant flows in lateral direction in the center of the condenser. When the Rankine condenser 11 and the air-conditioning condenser 13 are disposed side by side as viewed from the front of the vehicle 1, one of the tanks of each condenser is located at a position close to the center of the vehicle as viewed from the front of the vehicle 1. However, the tank per se has no cooling function even if the outside air hits the tank. The vehicle 1 has an opening that is provided in the front thereof for introducing air. Therefore, the area corresponding to the tank in the opening is useless for cooling and it means that the front opening is unnecessarily enlarged in the above arrangement of the Rankine condenser 11 and the air-conditioning condenser 13. The increase of the area of the opening as viewed from the front of the vehicle 1 decreases the flexibility of designing the exterior appearance of the vehicle 1. Furthermore, framework members supporting the condenser and the radiator will have to be provided at an increased spacing and, accordingly, the flexibility of safety designing against collision is also decreased. By disposing the Rankine condenser 11 and the air-conditioning condenser 13 one above the other as viewed from the front 1A of the vehicle 1, in other words, by disposing the Rankine condenser 11 and the air-conditioning condenser 13 except the tanks in facing relation with the opening, the unnecessary increase of an area corresponding to the tank in the opening of the front of the vehicle 1 can be prevented and, therefore, the flexibility of designing the exterior appearance and safety design can be improved.

The vehicle refrigerator 101 further includes the engine radiator 12 for cooling engine-cooling water that cools the engine 10 for driving the vehicle 1 and the engine radiator 12 is disposed rearward of the Rankine condenser 11 in the longitudinal direction of the vehicle 1. Therefore, outside air 2 is introduced into the Rankine condenser 11 before the temperature of outside air 2 is increased by the heat exchanging in the engine radiator 12. Since the pressure of Rankine refrigerant can be reduced efficiently, the thermal efficiency of the Rankine cycle system can be improved. The engine radiator 12 has a large heat exchanging capacity and is a large-size device. Therefore, even if the Rankine condenser 11 is disposed forward of the engine radiator 12 in the longitudinal direction of the vehicle 1, the heat exchange performance, i.e., the cooling performance of the engine radiator 12 is substantially unaffected but ensured sufficiently.

The vehicle refrigerator 101 further includes the inverter radiator 14 for cooling inverter-cooling water to cool the inverter 420 that converts and supplies electric power to the electric motor 430 for driving the vehicle 1. The inverter radiator 14 and the air-conditioning condenser 13 are disposed one forward of the other in the longitudinal direction of the vehicle 1. In this case, the temperature of outside air 2 passing through the air-conditioning condenser 13 is relatively lower than that of outside air 2 passing through the Rankine condenser 11 and, therefore, the heat exchanging performance of the inverter radiator 14 is substantially unaffected

The air-conditioning condenser 13 is disposed forward of the inverter radiator 14 in the longitudinal direction of the vehicle 1. Therefore, outside air 2 that is yet to be heat exchanged in the inverter radiator 14 and hence relatively low in temperature is introduced into the air-conditioning condenser 13. Thus, high heat exchange performance and hence high cooling performance of the air-conditioning condenser 13 can be ensured.

When the Rankine condenser 11 and the air-conditioning condenser 13 are disposed one above the other, the engine radiator 12 which is large in size should be disposed forward or rearward of the Rankine condenser 11 and the air-conditioning condenser 13 in terms of installation space. In this case, the engine radiator 12 and the inverter radiator 14 should be disposed one above the other in terms of installation space. The inverter radiator 14 which receives relatively low-temperature inverter cooling water should be disposed forward or rearward of the air-conditioning condenser 13 whose heat radiation is small. Therefore, the engine radiator 12 should preferably disposed rearward of the Rankine condenser 11.

The vehicle refrigerator 102 according to the second embodiment is made by modifying the disposition of the components of the vehicle refrigerator 101 according to the first embodiment. Specifically, the disposition of the air-conditioning condenser 13 and the Rankine condenser 11 is reversed and also the disposition of the inverter radiator 14 and the engine radiator 12 is reversed.

The following description will use the same reference numerals for the common elements or components in the first and the second embodiments, and the description of such elements or components will be omitted.

Referring to FIG: 4, the disposition of the components of the vehicle refrigerator 102 according to the second embodiment is shown. An engine radiator 22 and an inverter radiator 24 are disposed one above the other. Specifically, the engine radiator 22 is disposed above the inverter radiator 24. A Rankine condenser 21 and an air-conditioning condenser 23 are also disposed one above the other and forward of the engine radiator 22 and the inverter radiator 24 in the longitudinal direction of the vehicle 1, respectively. The air-conditioning condenser 23 is located forward of the Rankine condenser 21.

The rest of the structure and the operation of the vehicle refrigerator 102 according to the second embodiment are the same as those of the vehicle refrigerator 101 according to the first embodiment and the description of such structure or operation will be omitted.

The vehicle refrigerator 102 according to the second embodiment offers the same advantageous effects as the vehicle refrigerator 101 according to the first embodiment.

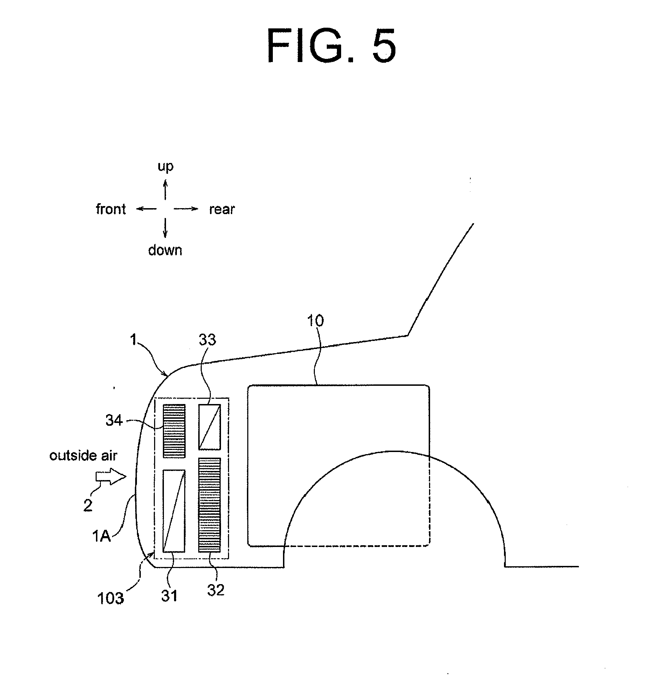

The vehicle refrigerator 103 according to the third embodiment shown in FIG. 5 is made by reversing the disposition of the air-conditioning condenser 13 and the inverter radiator 14 of the vehicle refrigerator 101 according to the first embodiment.

Referring to FIG. 5, the disposition of a Rankine condenser 31 and an engine radiator 32 in the vehicle refrigerator 103 according to the third embodiment is the same as that of the Rankine condenser 11 and the engine radiator 12 in the vehicle refrigerator 101 according to the first embodiment. The Rankine condenser 31 is disposed in the frontmost position and the engine radiator 32 is disposed rearward of the Rankine condenser 31. An inverter radiator 34 is disposed above the Rankine condenser 31 and an air-conditioning condenser 33 is disposed above the engine radiator 32.

The air-conditioning condenser 33 and the engine radiator 32 are disposed rearward of the inverter radiator 34 and the Rankine condenser 31, respectively, with respect to the flowing direction of outside air 2 that is introduced to the vehicle 1, i.e., in the longitudinal direction of the vehicle 1. In this case, the Rankine condenser 31 and the air-conditioning condenser 33 are disposed one above the other in the vertical direction of the vehicle 1, i.e., as viewed from the front 1A of the vehicle 1.

The rest of the structure and the operation of the vehicle refrigerator 103 according to the third embodiment are the same as those of the vehicle refrigerator 101 according to the first embodiment and the description of such structure or operation will be omitted.

The vehicle refrigerator 103 according to the third embodiment offers the same advantageous effects as the vehicle refrigerator 101 according to the first embodiment.

In the vehicle refrigerator 103 of the third embodiment, the inverter radiator 34 is disposed in the frontmost position in the vehicle 1. Since the inverter radiator 34 received outside air 2 before being heat exchanged by the heat exchange in the air-conditioning condenser 33, high heat exchanging performance, i.e., high cooling performance can be ensured in the inverter radiator 34 and, therefore, the inverter 420 and the electric motor 430 in the inverter cooling circuit 400 (refer to FIGS. 2 and 5) can be cooled further.

A vehicle with a Rankine cycle system and a refrigerating cycle system for air-conditioning includes a Rankine condenser forming a part of the Rankine cycle system which converts waste heat of a vehicle into power and an air-conditioning condenser forming a part of the refrigerating cycle system. The Rankine condenser and the air-conditioning condenser are disposed one above the other in the vehicle as viewed from a front of the vehicle.

## Claims

1. A vehicle with a Rankine cycle system and a refrigerating cycle system for air-conditioning comprising:
a Rankine condenser (11, 21, 31) forming a part of the Rankine cycle system which converts waste heat of a vehicle into power; and
an air-conditioning condenser (13, 23, 33) forming a part of the refrigerating cycle system, **characterized in:**
**that** the Rankine condenser and the air-conditioning condenser are disposed one above the other in the vehicle as viewed from a front of the vehicle.

2. The vehicle with the Rankine cycle system and the refrigerating cycle system for air-conditioning according to claim 1, further comprising:
an engine radiator (12, 22, 32) for cooling engine-cooling water, **characterized in:**
**that** the engine radiator is disposed rearward of the Rankine condenser in a longitudinal direction of the vehicle.

3. The vehicle with the Rankine cycle system and the refrigerating cycle system for air-conditioning according to any one of claims 1 and 2, further comprising:
a power device radiator (14, 24, 34) for cooling power device cooling water, **characterized in:**
**that** the power device radiator and the air-conditioning condenser are disposed one forward of the other in a longitudinal direction of the vehicle.

4. The vehicle with the Rankine cycle system and the refrigerating cycle system for air-conditioning according to claim 3, **characterized in:**
**that** the air-conditioning condenser is disposed forward of the power device radiator in the longitudinal direction of the vehicle.

5. The vehicle with the Rankine cycle system and the refrigerating cycle system for air-conditioning according to claim 3, **characterized in:**
**that** the power device radiator is disposed forward of the air-conditioning condenser in the longitudinal direction of the vehicle.

6. The vehicle with the Rankine cycle system and the refrigerating cycle system for air-conditioning according to claim 3, **characterized in:**
**that** the power device radiator is disposed above the Rankine condenser as viewed from the front of the vehicle.

7. The vehicle with the Rankine cycle system and the refrigerating cycle system for air-conditioning according to any one of claims 1 through 6, **characterized in:**
**that** the Rankine condenser and the air-conditioning condenser includes tanks provided on opposite lateral sides of the Rankine condenser and the air-conditioning condenser, respectively.

8. The vehicle with the Rankine cycle system and the refrigerating cycle system for air-conditioning according to any one of claims 1 through 7, further including:
an opening provided in front of the vehicle for introducing outside air, **characterized in:**
**that** the Rankine condenser and the air-conditioning condenser are facing the opening.

9. The vehicle with the Rankine cycle system and the refrigerating cycle system for air-conditioning according to claim 7, **characterized in:**
**that** the Rankine condenser and the air-conditioning condenser except the tanks are facing the opening.
